# EUROPÄISCHE PATENTSCHRIFT

(11) **EP 2 644 473 B1**
(45) Veröffentlichungstag und Bekanntmachung des Hinweises auf die Patenterteilung: **23.01.2019**
(21) Anmeldenummer: 13157143.2
(22) Anmeldetag: 28.02.2013
(51) Int. Cl.: B62B 5/02, A61G 5/06, B62B 5/00, B62B 1/10

(54) **Treppensteigvorrichtung und Steuerungsverfahren für deren Steigeinheit**
Stair climbing device and controlling method of its stepping unit
Dispositif de montée de marches et méthode de contrôle de son actuateur

(30) Priorität: 30.03.2012 DE 102012205204
(43) Veröffentlichungstag der Anmeldung: 02.10.2013
(73) Patentinhaber: AAT Alber Antriebstechnik GmbH, 72458 Albstadt (DE)
(72) Erfinder:
(74) Vertreter: Kohler Schmid Möbus Patentanwälte

(56) Entgegenhaltungen:
- EP-A2- 1 038 513
- DE-A1- 10 161 220
- DE-C1- 10 010 775
- US-A- 5 195 762

## Beschreibung

Die Erfindung betrifft eine Treppensteigvorrichtung mit einer Trägereinheit und einer mit der Trägereinheit verbundenen Steigeinheit, wobei die Steigeinheit mindestens ein Steigelement aufweist, das durch einen Antriebsmotor antreibbar ist und so ausgebildet ist, dass es mit der jeweils nächstgelegenen Treppenstufe einer Treppe in Berührung gelangen und die Treppensteigvorrichtung auf die nächstgelegene Treppenstufe heraufheben oder absenken kann, wobei die Steigeinheit mit unterschiedlichen Antriebsgeschwindigkeiten antreibbar ist und die Antriebsgeschwindigkeit kurz vor dem Aufsetzen eines ersten Steigelements auf die nächstgelegene Treppenstufe gegenüber einer ersten vorbestimmte Antriebsgeschwindigkeit absenkbar ist, sodass ein weiches Aufsetzen erreicht wird.

Die Erfindung betrifft außerdem ein Verfahren zum Betrieb einer Steigeinheit einer Treppensteigvorrichtung, wobei die Steigeinheit mindestens ein Steigelement aufweist, das durch einen Antriebsmotor antreibbar ist und so ausgebildet ist, dass es mit der jeweils nächstgelegenen Treppenstufe einer Treppe in Berührung gelangen und die Treppensteigvorrichtung auf die nächstgelegene Treppenstufe heraufheben oder absenken kann, wobei die Steigeinheit mit unterschiedlichen Antriebsgeschwindigkeiten antreibbar ist und die Antriebsgeschwindigkeit kurz vor dem Aufsetzen eines ersten Steigelements auf die nächstgelegene Treppenstufe gegenüber einer ersten vorbestimmten Antriebsgeschwindigkeit abgesenkt wird, sodass ein weiches Aufsetzen erreicht wird.

Treppensteigvorrichtungen werden zum Befördern von schweren Lasten oder gehunfähigen Personen eingesetzt. Im letzteren Fall kann die Treppensteigvorrichtung einen Sitz oder eine Aufnahme für einen Rollstuhl aufweisen, um damit einer gehunfähigen Person das Treppensteigen zu erleichtern.

Eine derartige Treppensteigvorrichtung ist beispielsweise aus der EP 1 038 513 B1 bekannt geworden. Bei der bekannten Treppensteigvorrichtung ist vorgesehen, dass die Antriebsgeschwindigkeit kurz vor dem Aufsetzen eines Steigelements auf den nächstgelegenen Treppenabsatz gegenüber einer ersten vorbestimmten Antriebsgeschwindigkeit reduzierbar ist, sodass ein weiches Aufsetzen erreicht wird, und nach dem Aufsetzen auf den nächstgelegenen Treppenabsatz wieder auf die erste vorbestimmte Antriebsgeschwindigkeit erhöht wird. Diese Vorgehensweise ist relativ statisch und unflexibel.

Aus der DE 101 61 220 A1 ist eine Treppensteigvorrichtung bekannt, die eine Steuereinrichtung aufweist, die dazu ausgelegt ist, den Betrieb des Steigelements so zu steuern, dass der Steigvorgang unterbrochen wird, wenn das Steigelement mit dem jeweils nächstgelegenen Treppenabsatz einer Treppe in Berührung gelangt ist. Die Antriebsgeschwindigkeit kann in Abhängigkeit eines Haltekraftsensors eingestellt werden.

Aufgabe der vorliegenden Erfindung ist es, eine Treppensteigvorrichtung und ein entsprechendes Verfahren dahin gehend weiterzubilden, dass ein flexibleres Treppensteigen ermöglicht wird und ggf. ein schnelleres Treppensteigen möglich ist.

Gelöst wird diese Aufgabe erfindungsgemäß durch eine Treppensteigvorrichtung mit einer Trägereinheit und einer mit der Trägereinheit verbundenen Steigeinheit, wobei die Steigeinheit mindestens ein Steigelement aufweist, das durch einen Antriebsmotor antreibbar ist und so ausgebildet ist, dass es mit der jeweils nächstgelegenen Treppenstufe einer Treppe in Berührung gelangen und die Treppensteigvorrichtung auf die nächstgelegene Treppenstufe heraufheben oder absenken kann, wobei die Steigeinheit mit unterschiedlichen Antriebsgeschwindigkeiten antreibbar ist und die Antriebsgeschwindigkeit kurz vor dem Aufsetzen eines ersten Steigelements auf die nächstgelegene Treppenstufe gegenüber einer ersten vorbestimmten Antriebsgeschwindigkeit absenkbar ist, sodass ein weiches Aufsetzen erreicht wird, wobei die Treppensteigvorrichtung eingerichtet ist, dass nach dem Aufsetzen auf die nächstgelegene Treppenstufe die Antriebsgeschwindigkeit auf eine von der ersten vorbestimmten Antriebsgeschwindigkeit verschiedene zweite Antriebsgeschwindigkeit eingestellt wird.

Somit muss mit der erfindungsgemäßen Treppensteigvorrichtung nach dem Absenken der Antriebsgeschwindigkeit nicht wieder die erste vorbestimmte Antriebsgeschwindigkeit eingestellt werden. Der Treppensteigvorgang kann dadurch erheblich flexibler gestaltet werden, indem beispielsweise eine höhere oder niedrigere Antriebsgeschwindigkeit eingestellt wird als die erste vorbestimmte Antriebsgeschwindigkeit. Insbesondere, wenn eine höhere als die erste vorbestimmte Antriebsgeschwindigkeit nach dem Aufsetzen des Steigelements eingestellt wird, kann ein schnelleres Treppensteigen erfolgen als mit der Vorrichtung des Standes der Technik.

Es ist daher besonders vorteilhaft, wenn nach dem Aufsetzen auf die nächstgelegene Treppenstufe die zweite Antriebsgeschwindigkeit auf eine höhere Antriebsgeschwindigkeit als die erste vorbestimmte Antriebsgeschwindigkeit einstellbar ist.

Weitere Vorteile ergeben sich, wenn in Abhängigkeit von dem Wert der ersten vorbestimmten Antriebsgeschwindigkeit nach dem Aufsetzen auf die nächstgelegene Treppenstufe die zweite Antriebsgeschwindigkeit auf einen Wert über oder unter der vorbestimmten ersten Antriebsgeschwindigkeit einstellbar ist. Wenn beispielsweise eine relativ niedrige erste vorbestimmte Antriebsgeschwindigkeit gewählt wird, kann nach dem Aufsetzen des Steigelements auf die nächstgelegene Treppenstufe die Antriebsgeschwindigkeit über die erste vorbestimmte Antriebsgeschwindigkeit erhöht werden. Dadurch kann der Treppensteigvorgang beschleunigt werden. Wenn jedoch die erste vorbestimmte Antriebsgeschwindigkeit sehr hoch gewählt wird, so kann die zweite Antriebsgeschwindigkeit nach dem Aufsetzen des Steigelements auf die nächstgelegene Treppenstufe niedriger gewählt werden als die erste vorbestimmte Antriebsgeschwindigkeit, damit die Treppensteigvorrichtung nicht zu schnell wird und somit ein Unfall vermieden wird. Beispielsweise kann die zweite Antriebsgeschwindigkeit um mindestens 10 %, vorzugsweise mindestens 15 %, besonders bevorzugt mindestens 20 % höher oder niedriger gewählt werden als die erste vorbestimmte Antriebsgeschwindigkeit.

Gemäß einer besonders bevorzugten Ausführungsform der Erfindung kann vorgesehen sein, dass die Treppensteigvorrichtung in einem Einzelstufenmodus betreibbar ist und im Einzelstufenmodus die Antriebsgeschwindigkeit kurz vor dem Aufsetzen eines zweiten Steigelements auf die nächstgelegene Treppenstufe reduzierbar ist und die Antriebsgeschwindigkeit nach dem Aufsetzen des zweiten Steigelements auf die maximale Antriebsgeschwindigkeit, die höher ist als die erste vorbestimmte Antriebsgeschwindigkeit, erhöht wird. Dadurch kann ein besonders schneller Treppensteigvorgang realisiert werden.

Weiterhin kann vorgesehen sein, dass die Treppensteigvorrichtung in einem Dauerbetriebsmodus betreibbar ist und im Dauerbetriebsmodus die Antriebsgeschwindigkeit kurz vor dem Aufsetzen eines zweiten Steigelements auf die nächstgelegene Treppenstufe reduzierbar ist und nach dem Aufsetzen auf eine dritte, von der ersten und zweiten Antriebsgeschwindigkeit abweichende Antriebsgeschwindigkeit einstellbar ist. Insbesondere kann vorgesehen sein, dass die Antriebsgeschwindigkeit kurz vor dem Aufsetzen eines ersten Steigelements auf die nächstgelegene Treppenstufe gegenüber der ersten vorbestimmten Antriebsgeschwindigkeit reduziert wird, sodass ein weiches Aufsetzen erreicht wird, und nach dem Aufsetzen auf die nächstgelegene Treppenstufe über die erste vorbestimmte Antriebsgeschwindigkeit erhöht wird. Danach kann die Antriebsgeschwindigkeit wiederum kurz vor dem Aufsetzen des zweiten Steigelements auf die nächste Treppenstufe reduziert werden, sodass ein weiches Aufsetzen erreicht wird, und nach dem Aufsetzen des zweiten Steigelements kann die Antriebsgeschwindigkeit erhöht werden, allerdings auf eine Antriebsgeschwindigkeit, die unterhalb der ersten Antriebsgeschwindigkeit liegt. Es kann weiterhin vorgesehen sein, dass bis zum Erreichen einer maximalen Antriebsgeschwindigkeit die Antriebsgeschwindigkeit nach dem Aufsetzen eines Steigelements stets gegenüber der vorhergehenden Antriebsgeschwindigkeit, die vor dem Absenken der Antriebsgeschwindigkeit eingestellt war, erhöht wird und nach Erreichen einer vorbestimmten oder maximalen Antriebsgeschwindigkeit die Antriebsgeschwindigkeit nach dem Aufsetzen eines Steigelements stets gegenüber der vor dem Reduzieren der Antriebsgeschwindigkeit vor dem Aufsetzen eingestellten Geschwindigkeit reduziert wird, insbesondere bis zu einer minimalen oder vorbestimmten Geschwindigkeit.

Gemäß einer bevorzugten Ausgestaltung der Erfindung kann eine elektronische Steuereinrichtung zur Steuerung der Antriebsgeschwindigkeit vorgesehen sein. Mithilfe der elektronischen Steuereinrichtung kann die Antriebsgeschwindigkeit geeignet eingestellt werden. Die Steuereinrichtung steht daher vorzugsweise mit dem Antriebsmotor signaltechnisch in Verbindung.

Die Treppensteigvorrichtung weist vorzugsweise eine Rollstuhlaufnahme oder einen Sitz zur Beförderung gehunfähiger Personen auf. Damit ist die Treppensteigvorrichtung geeignet, einen Rollstuhl zu transportieren oder eine Person, die Schwierigkeiten mit dem Treppensteigen hat, zu transportieren, wenn diese keinen Rollstuhl hat, die Treppensteigvorrichtung dagegen einen Sitz aufweist.

Weiterhin kann vorgesehen sein, dass die Treppensteigvorrichtung eine Lastaufnahme, insbesondere eine Schaufel, aufweist. Dadurch ist die Treppensteigvorrichtung geeignet, schwere Lasten über eine Treppe zu transportieren.

Besondere Vorteile ergeben sich, wenn eine Antriebsgeschwindigkeitseinstelleinrichtung vorgesehen ist. Beispielsweise kann ein Drehpotentiometer als Antriebsgeschwindigkeitseinstelleinrichtung vorgesehen sein. So lässt sich durch einen Benutzer die Antriebsgeschwindigkeit, insbesondere die erste vorbestimmte Antriebsgeschwindigkeit, einstellen. Insbesondere kann die Antriebsgeschwindigkeit in Abhängigkeit von der zu transportierenden Last und/oder der Steilheit und/oder der Treppenstufenhöhe der Treppe eingestellt werden.

Gemäß einer besonders bevorzugten Ausführungsform kann zumindest ein Sensor zur Lagebestimmung zumindest eines Steigelements vorgesehen sein. Insbesondere kann über den Sensor die Lage eines Steigelements bestimmt werden, sodass erkannt werden kann, wann sich ein Steigelement kurz vor dem Aufsetzen auf die nächstgelegene Treppenstufe befindet. Der Sensor kann beispielsweise als Drehzahlmesser oder als Hallsensor ausgebildet sein. Ein Infrarotsensor oder andere Sensoren, die es ermöglichen, die Lage eines Steigelements zu erfassen, sind ebenfalls denkbar. Durch den Sensor kann ebenfalls detektiert werden, wann ein Treppensteigvorgang beendet wird. Somit ist es insbesondere beim Betrieb der Treppensteigvorrichtung im Einzelstufenmodus möglich, die Steigeinheit anzuhalten, wenn erkannt wird, dass der Treppensteigvorgang beendet ist.

Weitere Vorteile ergeben sich, wenn der zumindest eine Sensor durch eine Aktivierungseinrichtung aktivierbar und deaktivierbar ist. Dadurch kann beispielsweise ausgewählt werden, ob die Treppensteigvorrichtung im Einzelstufenmodus oder im Dauerbetriebsmodus betrieben werden soll.

In den Rahmen der Erfindung fällt außerdem ein Verfahren zum Betrieb einer Steigeinheit einer Treppensteigvorrichtung, wobei die Steigeinheit mindestens ein Steigelement aufweist, das durch einen Antriebsmotor angetrieben wird und so ausgebildet ist, dass es mit der jeweils nächstgelegenen Treppenstufe einer Treppe in Berührung gelangen und die Treppensteigvorrichtung auf die nächstgelegene Treppenstufe heraufheben oder absenken kann, wobei die Steigeinheit mit unterschiedlichen Antriebsgeschwindigkeiten angetrieben wird und die Antriebsgeschwindigkeit kurz vor dem Aufsetzen eines ersten Steigelements auf die nächstgelegene Treppenstufe gegenüber einer ersten vorbestimmten Antriebsgeschwindigkeit abgesenkt wird, sodass ein weiches Aufsetzen erreicht wird, wobei nach dem Aufsetzen auf die nächstgelegene Treppenstufe die Antriebsgeschwindigkeit auf eine von der ersten vorbestimmten Antriebsgeschwindigkeit verschiedene zweite Antriebsgeschwindigkeit eingestellt wird. Mit einem solchen Verfahren ergeben sich die oben beschriebenen Vorteile.

Gemäß einer Verfahrensvariante kann vorgesehen sein, dass nach dem Aufsetzen auf die nächstgelegene Treppenstufe die zweite Antriebsgeschwindigkeit auf eine höhere Antriebsgeschwindigkeit als die vorbestimmte Antriebsgeschwindigkeit eingestellt wird. Dadurch kann der Treppensteigvorgang beschleunigt werden.

Besondere Vorteile ergeben sich mit einer Verfahrensvariante, gemäß der in Abhängigkeit von dem Wert der ersten vorbestimmten Antriebsgeschwindigkeit nach dem Aufsetzen auf die nächstgelegene Treppenstufe die zweite Antriebsgeschwindigkeit auf einen Wert über oder unter der vorbestimmten ersten Antriebsgeschwindigkeit eingestellt wird. Somit kann der Treppensteigvorgang insbesondere in Abhängigkeit von der Wahl der ersten vorbestimmten Antriebsgeschwindigkeit gesteuert werden.

Eine weitere Verfahrensvariante zeichnet sich dadurch aus, dass die Treppensteigvorrichtung in einem Einzelstufenmodus betrieben wird und im Einzelstufenmodus die Antriebsgeschwindigkeit kurz vor dem Aufsetzen eines zweiten Steigelements auf die nächstgelegene Treppenstufe reduziert wird und die Antriebsgeschwindigkeit nach dem Aufsetzen des zweiten Steigelements auf die maximale Antriebsgeschwindigkeit erhöht wird. Somit kann ein Treppensteigvorgang im Einzelstufenmodus mit optimaler Geschwindigkeit durchgeführt werden. Für einen Treppensteigvorgang wird weniger Zeit benötigt. Insbesondere wenn Lasten transportiert werden, wirkt sich das auf die Kosten des Warentransports positiv aus.

Weiterhin kann vorgesehen sein, dass die Treppensteigvorrichtung in einem Dauerbetriebsmodus betrieben wird und im Dauerbetriebsmodus die Antriebsgeschwindigkeit kurz vor dem Aufsetzen eines zweiten Steigelements auf die nächstgelegene Treppenstufe reduziert wird und die Antriebsgeschwindigkeit nach dem Aufsetzen auf eine dritte, von der ersten und zweiten Antriebsgeschwindigkeit abweichende Antriebsgeschwindigkeit eingestellt wird.

Die Lage zumindest eines Steigelements kann über einen Sensor erfasst werden, und die Antriebsgeschwindigkeit kann in Abhängigkeit von der erfassten Lage eingestellt werden. Insbesondere kann die Antriebsgeschwindigkeit kurz vor dem Aufsetzen eines Steigelements auf die nächstgelegene Treppenstufe dadurch automatisch richtig eingestellt werden. Der Sensor kann erfassen, wo sich das Steigelement in Bezug auf die nächstgelegene Treppenstufe befindet, und entsprechend automatisch die Antriebsgeschwindigkeit reduzieren, sodass das Aufsetzen gedämpft wird.

Bei einer Verfahrensvariante kann vorgesehen sein, dass die Steigeinheit nach einem Treppensteigvorgang in einer vorgegebenen Lage gestoppt wird. Somit muss ein Benutzer einen Treppensteigvorgang nicht aktiv beenden, sondern wird der Treppensteigvorgang automatisch beendet. Dies ist insbesondere im Einzelstufenmodus hilfreich.

Weiterhin kann vorgesehen sein, dass der zumindest eine Sensor aktivierbar und deaktivierbar ist. Insbesondere kann dadurch ein Einzelstufenmodus aktiviert oder deaktiviert werden.

Gemäß einer bevorzugten Verfahrensvariante kann vorgesehen sein, dass das Absenken und/oder Erhöhen der Antriebsgeschwindigkeit rampenförmig erfolgt. Damit wird die Beschleunigung bzw. Verzögerung gedämpft und wird das Fahrverhalten der Treppensteigvorrichtung für einen Benutzer angenehmer.

Weitere Merkmale und Vorteile der Erfindung ergeben sich aus der nachfolgenden Beschreibung eines Ausführungsbeispiels anhand der Figuren der Zeichnung, die erfindungswesentliche Einzelheiten zeigen.

Es zeigen:
- Fig. 1: eine Seitenansicht einer erfindungsgemäßen Treppensteigvorrichtung;
- Fig. 2a - 2e: die verschiedenen Schritte eines Treppensteigvorgangs;
- Fig. 3: ein Diagramm zur Darstellung des Ablaufs eines Treppensteigvorgangs im Einzefstufenmodus;
- Fig. 4: ein Diagramm zur Darstellung eines Treppensteigvorgangs im Dauerbetriebsmodus.

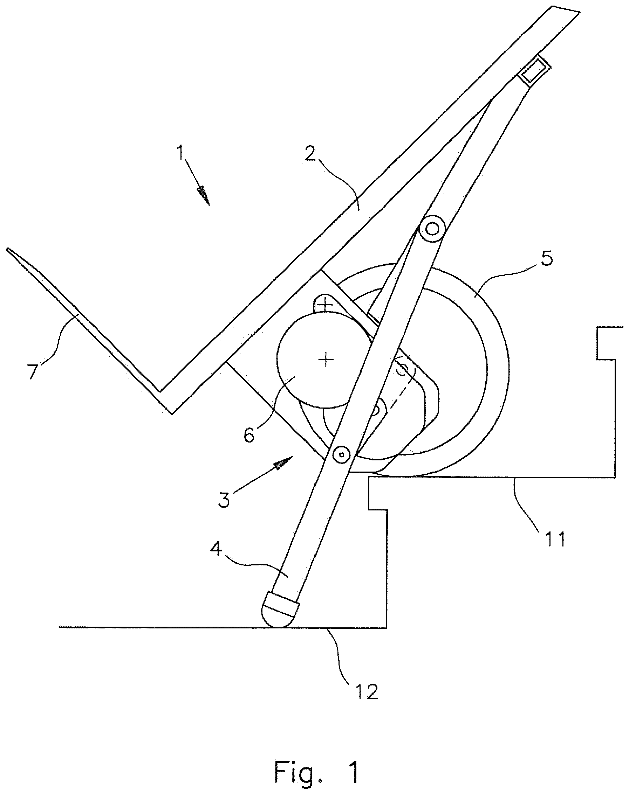

Die Fig. 1 zeigt eine Treppensteigvorrichtung 1 in einer Seitenansicht. Die Treppensteigvorrichtung umfasst eine Trägereinheit 2, an der eine Steigeinheit 3 angeordnet ist. Als erstes Steigelement 4 umfasst die Steineinheit 3 einen Steigfuß 4 und als zweites Steigelement 5 ein Laufrad. Die Steigelemente 4, 5 werden durch einen Antriebsmotor 6 angetrieben. In der gezeigten Stellung befindet sich das Steigelement 5 noch auf der Treppenstufe 11, während sich das Steigelement 4 bereits auf der nächstgelegenen Treppenstufe 12 befindet. Im weiteren Ablauf des Treppensteigvorgangs nach unten wird das Steigelement 5 von der Treppenstufe 11 abgehoben und ebenfalls auf der Treppenstufe 12 abgesetzt. Anschließend wird das Steigelement 4 wiederum angehoben und auf eine nächstgelegene Treppenstufe abgesetzt, oder der Treppensteigvorgang wird angehalten.

Im gezeigten Ausführungsbeispiel der Fig. 1 weist die Treppensteigvorrichtung 1 eine Lastaufnahme 7 auf, die hier als Schaufel ausgebildet ist.

In einem nicht dargestellten Griffbereich ist ein Antriebsgeschwindigkeitseinstellmittel, insbesondere ein Drehpotentiometer, vorgesehen. Außerdem kann dort ein Schalter vorgesehen sein, mit dem ein hier nicht dargestellter Sensor aktiviert oder deaktiviert werden kann. Der Sensor ist dafür ausgelegt, die Lage eines Steigelements 4, 5 zu detektieren. Außerdem ist im Griffbereich ein Schalter zum An- und Ausschalten der Steigeinheit der Treppensteigvorrichtung vorgesehen.

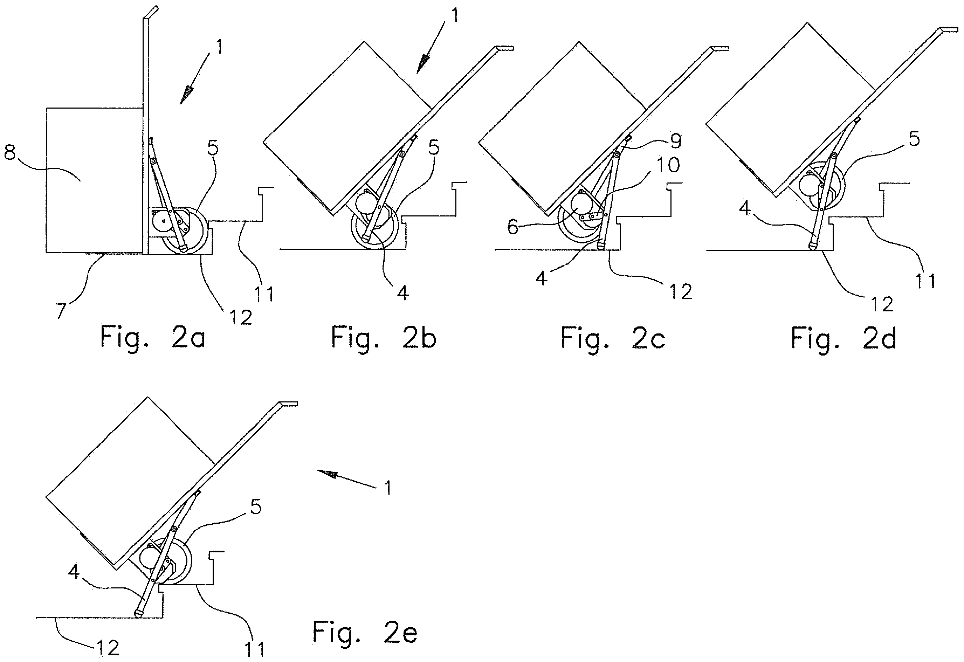

In den Fig. 2a bis 2e ist ein Treppensteigvorgang nach oben in unterschiedlichen Phasen dargestellt. In der Fig. 2a steht die Treppensteigvorrichtung 1, auf deren Lastaufnahme 7 eine Last 8 angeordnet ist, mit ihrem Steigelement 5 auf der Treppenstufe 12. Das Steigelement 5 berührt außerdem die Vorderkante der nächstgelegenen Treppenstufe 11. Die Treppensteigvorrichtung 1 wird um die Achse des Steigelements 5 im Uhrzeigersinn verschwenkt, was in der Fig. 2b zu erkennen ist. Genauso wie in der Fig. 2a ist das Steigelement 4 nicht in Berührung mit einer Treppenstufe 11, 12. Nun wird die Steigeinheit aktiviert. Dabei wird das Steigelement 4 angetrieben und auf die Treppenstufe 12 aufgesetzt. Dabei wird die Treppensteigvorrichtung 1 angehoben. Das Steigelement 5 gerät außer Kontakt mit der Treppenstufe 12. Dies ist in der Fig. 2c dargestellt. In der Fig. 2c ist außerdem deutlich zu erkennen, dass das Steigelement 4 zum einen an einer Strebe 9 über dem Antrieb 6 angelenkt ist. Zum anderen ist zu erkennen, dass das Steigelement 4 mittels eines Auslegers 10 angetrieben wird, der an dem Steigelement 4 angelenkt ist.

Bei weiterem Antrieb des Antriebs 6 wird das Steigelement 5 über die Höhe der nächstgelegenen Stufe 11 angehoben, wie dies in der Fig. 2d zu sehen ist. Kurz ehe das Steigelement 5 auf die nächstgelegene Treppenstufe 11 abgesetzt wird, wird die Antriebsgeschwindigkeit reduziert, sodass das Steigelement 5 langsam und sachte auf der Treppenstufe 11 abgesetzt wird, wie dies in der Fig. 2e zu sehen ist. Anschließend wird das Steigelement 4 nachgezogen.

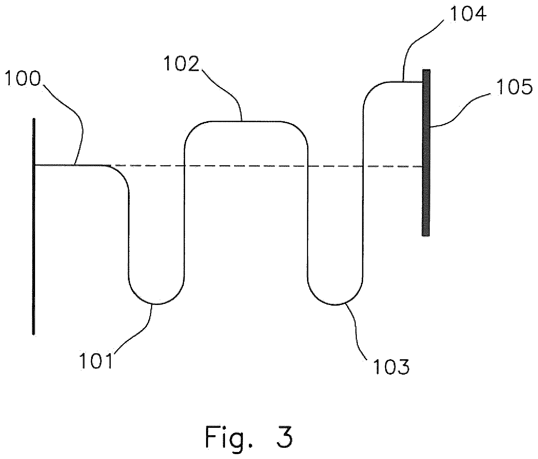

Die Fig. 3 veranschaulicht einen Treppensteigvorgang im Einzelstufenmodus. Zu Beginn des Treppensteigvorgangs wird die Treppensteigeinheit mit einer ersten vorbestimmten Antriebsgeschwindigkeit betrieben, s. Bezugsziffer 100. Anschließend wird durch einen Sensor erkannt, dass sich das erste Steigelement der nächsten Treppenstufe annähert. Infolgedessen wird die Antriebsgeschwindigkeit reduziert. Die reduzierte Antriebsgeschwindigkeit ist bei der Bezugsziffer 101 dargestellt. Nach dem Aufsetzen des ersten Steigelements auf die nächstgelegene Treppenstufe wird die Antriebsgeschwindigkeit erhöht, und zwar auf eine Antriebsgeschwindigkeit, die über der ersten Antriebsgeschwindigkeit 100 liegt. Dies ist bei der Bezugsziffer 102 dargestellt. Im Weiteren wird detektiert, dass sich das zweite Steigelement dem Aufsetzen auf der nächsten Treppenstufe annähert. Infolgedessen wird die Antriebsgeschwindigkeit wiederum reduziert, was durch die Bezugsziffer 103 dargestellt ist. Durch das Reduzieren der Antriebsgeschwindigkeit wird ein ruckartiges, stoßartiges Aufsetzen des Steigelements auf einer Treppenstufe verhindert. Das Aufsetzen erfolgt demnach gedämpft. In der Fig. 3 sind die Antriebsgeschwindigkeiten 101, 103 gleich dargestellt. Dies ist vorteilhaft, jedoch nicht zwingend. Die Antriebsgeschwindigkeit 103 könnte über oder unter der Antriebsgeschwindigkeit 101 liegen. Sie sollte jedoch deutlich unter den Antriebsgeschwindigkeiten 100, 102 liegen.

Nach dem Aufsetzen des zweiten Steigelements auf der nächsten Treppenstufe wird die Antriebsgeschwindigkeit wieder erhöht, und zwar auf die maximale Antriebsgeschwindigkeit, was mit der Bezugsziffer 104 dargestellt ist. Über einen Sensor wird detektiert, wann der Treppensteigvorgang beendet ist. Danach wird die Steigeinheit abgeschaltet, was mit der Bezugsziffer 105 angedeutet ist.

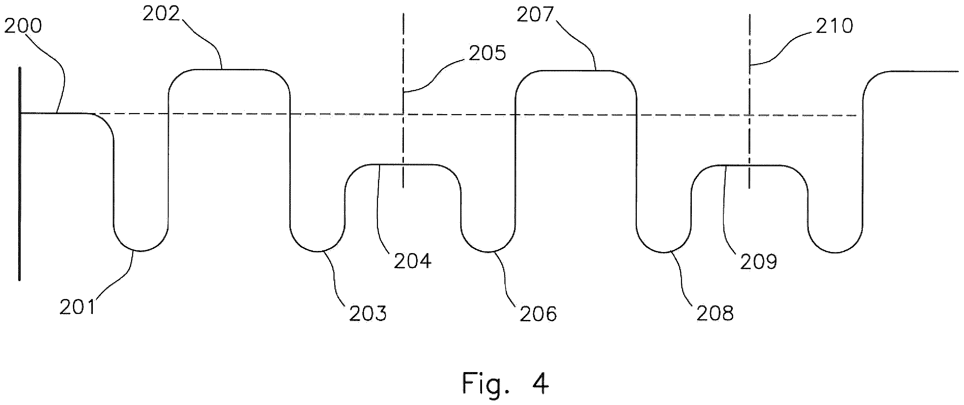

Die Fig. 4 zeigt schematisch einen Treppensteigvorgang im Dauerbetriebsmodus. Zunächst wird die Steigeinheit mit der ersten vorbestimmten Antriebsgeschwindigkeit 200 angetrieben. Durch einen Sensor wird detektiert, wann sich ein Steigelement kurz vor dem Aufsetzen auf der nächstgelegenen Treppenstufe befindet. Wenn dies detektiert wird, wird die Antriebsgeschwindigkeit reduziert, was mit der Bezugsziffer 201 angedeutet ist. Nachdem das erste Steigelement auf der nächsten Treppenstufe abgesetzt wurde, wird die Antriebsgeschwindigkeit wieder erhöht, und zwar auf eine Antriebsgeschwindigkeit, die über der ersten vorbestimmten Antriebsgeschwindigkeit 200 liegt. Dies ist durch die Bezugsziffer 202 angedeutet. In der Folge wird nun wieder detektiert, wann sich das zweite Steigelement kurz vor dem Aufsetzen auf der nächstgelegenen Treppenstufe befindet. Ist dies detektiert, wird die Antriebsgeschwindigkeit wieder reduziert, was mit der Bezugsziffer 203 angedeutet ist. Nach dem Aufsetzen des zweiten Steigelements wird die Antriebsgeschwindigkeit wieder erhöht, jedoch auf einen Wert, der unterhalb der ersten Antriebsgeschwindigkeit 200 und unterhalb der zweiten Antriebsgeschwindigkeit 202 liegt. Dies ist mit der Bezugsziffer 204 angedeutet. Die gepunktete Linie 205 symbolisiert das Ende eines Treppensteigvorgangs. Der nächste Treppensteigvorgang beginnt mit der Geschwindigkeit 204. Wird das Annähern des ersten Steigelements an die nächste Treppenstufe detektiert, wird die Antriebsgeschwindigkeit reduziert, was mit der Bezugsziffer 206 angedeutet ist. Nach dem Aufsetzen des ersten Steigelements auf der nächsten Treppenstufe wird die Antriebsgeschwindigkeit wieder erhöht, und zwar im Ausführungsbeispiel auf den gleichen Wert wie die Antriebsgeschwindigkeit 202. Dies ist durch die Ziffer 207 angedeutet. Wird in der Folge detektiert, dass das zweite Steigelement kurz vor dem Aufsetzen auf der nächsten Treppenstufe ist, wird die Antriebsgeschwindigkeit wieder reduziert, was mit der Bezugsziffer 208 angedeutet ist. Nach dem Aufsetzen des zweiten Steigelements wird die Antriebsgeschwindigkeit wieder erhöht, und zwar auf die gleiche Antriebsgeschwindigkeit wie die Antriebsgeschwindigkeit 204, was durch die Ziffer 209 angedeutet ist. Bei 210 ist der zweite Treppensteigvorgang beendet. Im gezeigten Ausführungsbeispiel sind die reduzierten Antriebsgeschwindigkeiten 201, 203, 206, 208 gleich dargestellt. Dies ist zwar vorteilhaft, jedoch nicht zwingend. Beispielsweise ist es denkbar, dass die reduzierten Antriebsgeschwindigkeiten lediglich in einem vorgegebenen Bereich liegen müssen oder auch höher oder niedriger als die vorhergehende niedrige Antriebsgeschwindigkeit sein können.

Außerdem sind die Antriebsgeschwindigkeiten 202 und 207 gleich dargestellt. Auch dies ist nicht zwingend. So könnte die Antriebsgeschwindigkeit 207 größer oder kleiner als die Antriebsgeschwindigkeit 202 sein.

Auch die Antriebsgeschwindigkeiten 204 und 209 sind gleich eingezeichnet. Die Antriebsgeschwindigkeit 209 könnte jedoch höher oder niedriger als die Antriebsgeschwindigkeit 204 sein. Die Antriebsgeschwindigkeiten 204, 209 könnten auch gleich der Antriebsgeschwindigkeit 200 sein.

Die erste Antriebsgeschwindigkeit 200 kann beispielsweise durch ein Antriebsgeschwindigkeitseinstellungsmittel, beispielsweise ein Drehpotentiometer, eingestellt werden. Je nachdem, welche erste vorbestimmte Antriebsgeschwindigkeit eingestellt wurde, kann nach der ersten Reduzierung der Antriebsgeschwindigkeit bei 201 eine höhere Antriebsgeschwindigkeit gewählt werden, so wie dies durch die Antriebsgeschwindigkeit 202 dargestellt wurde. Wurde jedoch schon die erste Antriebsgeschwindigkeit 200 sehr hoch gewählt, so kann nach der ersten Reduzierung der Antriebsgeschwindigkeit bei 201 die Antriebsgeschwindigkeit auf einen niedrigeren Wert angehoben werden als die erste Antriebsgeschwindigkeit 200. Weitere Variationsmöglichkeiten sind ebenfalls denkbar.

## Patentansprüche

1. Treppensteigvorrichtung (1) mit einer Trägereinheit (2) und einer mit der Trägereinheit (2) verbundenen Steigeinheit (3), wobei die Steigeinheit (3) mindestens ein Steigelement (4, 5) aufweist, das durch einen Antriebsmotor (6) antreibbar ist und so ausgebildet ist, dass es mit der jeweils nächstgelegenen Treppenstufe (11, 12) einer Treppe in Berührung gelangen und die Treppensteigvorrichtung (1) auf die nächstgelegene Treppenstufe (11, 12) heraufheben oder absenken kann, wobei die Steigeinheit (3) mit unterschiedlichen Antriebsgeschwindigkeiten antreibbar ist und die Antriebsgeschwindigkeit kurz vor dem Aufsetzen eines ersten Steigelements (4, 5) auf die nächstgelegene Treppenstufe (11, 12) gegenüber einer ersten vorbestimmten Antriebsgeschwindigkeit (100, 200) absenkbar ist, sodass ein weiches Aufsetzen erreicht wird, **dadurch gekennzeichnet, dass** die Treppensteigvorrichtung (1) eingerichtet ist, dass nach dem Aufsetzen auf die nächstgelegene Treppenstufe (11, 12) die Antriebsgeschwindigkeit auf eine von der ersten vorbestimmten Antriebsgeschwindigkeit (100, 200) verschiedene zweite Antriebsgeschwindigkeit (102, 202) eingestellt wird.

2. Treppensteigvorrichtung nach Anspruch 1, **dadurch gekennzeichnet, dass** nach dem Aufsetzen auf die nächstgelegene Treppenstufe die zweite Antriebsgeschwindigkeit (102, 202) auf eine höhere Antriebsgeschwindigkeit als die erste vorbestimmte Antriebsgeschwindigkeit (100,200) einstellbar ist.

3. Treppensteigvorrichtung nach einem der vorhergehenden Ansprüche, **dadurch gekennzeichnet, dass** in Abhängigkeit von dem Wert der ersten vorbestimmten Antriebsgeschwindigkeit (100, 200) nach dem Aufsetzen auf die nächstgelegene Treppenstufe (11, 12) die zweite Antriebsgeschwindigkeit (102, 202) auf einen Wert über oder unter der vorbestimmten ersten Antriebsgeschwindigkeit (100, 200) einstellbar ist.

4. Treppensteigvorrichtung nach einem der vorhergehenden Ansprüche, **dadurch gekennzeichnet, dass** die Treppensteigvorrichtung (1) in einem Einzelstufenmodus betreibbar ist und im Einzelstufenmodus die Antriebsgeschwindigkeit kurz vor dem Aufsetzen eines zweiten Steigelements (4, 5) auf die nächstgelegene Treppenstufe (11, 12) reduzierbar ist und die Antriebsgeschwindigkeit nach dem Aufsetzen des zweiten Steigelements (4, 5) auf die maximale Antriebsgeschwindigkeit (104) erhöht wird.

5. Treppensteigvorrichtung nach einem der vorhergehenden Ansprüche, **dadurch gekennzeichnet, dass** die Treppensteigvorrichtung (1) in einem Dauerbetriebsmodus betreibbar ist und im Dauerbetriebsmodus die Antriebsgeschwindigkeit kurz vor dem Aufsetzen eines zweiten Steigelements (4, 5) auf die nächstgelegene Treppenstufe (11, 12) reduzierbar ist und nach dem Aufsetzen auf eine dritte, von der ersten und zweiten Antriebsgeschwindigkeit (200, 202) abweichende Antriebsgeschwindigkeit (204) einstellbar ist.

6. Treppensteigvorrichtung nach einem der vorhergehenden Ansprüche, **dadurch gekennzeichnet, dass** eine elektronische Steuereinrichtung zur Steuerung der Antriebsgeschwindigkeit vorgesehen ist.

7. Treppensteigvorrichtung nach einem der vorhergehenden Ansprüche, **dadurch gekennzeichnet, dass** eine Antriebsgeschwindigkeitseinstelleinrichtung vorgesehen ist.

8. Treppensteigvorrichtung nach einem der vorhergehenden Ansprüche, **dadurch gekennzeichnet, dass** zumindest ein Sensor zur Lagebestimmung zumindest eines Steigelements (4, 5) vorgesehen ist.

9. Verfahren zum Betrieb einer Steigeinheit einer Treppensteigvorrichtung (1), wobei die Steigeinheit (3) mindestens ein Steigelement (4, 5) aufweist, das durch einen Antriebsmotor (6) antreibbar ist und so ausgebildet ist, dass es mit der jeweils nächstgelegenen Treppenstufe (11,12) einer Treppe in Berührung gelangen und die Treppensteigvorrichtung (1) auf die nächstgelegenen Treppenstufe (11, 12) heraufheben oder absenken kann, wobei die Steigeinheit (3) mit unterschiedlichen Antriebsgeschwindigkeiten antreibbar ist und die Antriebsgeschwindigkeit kurz vor dem Aufsetzen eines ersten Steigelements (4, 5) auf die nächstgelegene Treppenstufe (11, 12) gegenüber einer ersten vorbestimmten Antriebsgeschwindigkeit (100, 200) abgesenkt wird, sodass ein weiches Aufsetzen erreicht wird, **dadurch gekennzeichnet, dass** nach dem Aufsetzen auf die nächstgelegene Treppenstufe (11, 12) die Antriebsgeschwindigkeit auf eine von der ersten vorbestimmten Antriebsgeschwindigkeit (100, 200) verschiedene zweite Antriebsgeschwindigkeit (102, 202) eingestellt wird.

10. Verfahren nach Anspruch 9, **dadurch gekennzeichnet, dass** nach dem Aufsetzen auf die nächstgelegene Treppenstufe (11, 12) die zweite Antriebsgeschwindigkeit (102, 202) auf eine höhere Antriebsgeschwindigkeit als die erste vorbestimmte Antriebsgeschwindigkeit (100, 200) eingestellt wird.

11. Verfahren nach Anspruch 9, **dadurch gekennzeichnet, dass** in Abhängigkeit von dem Wert der ersten vorbestimmten Antriebsgeschwindigkeit (100, 200) nach dem Aufsetzen auf die nächstgelegene Treppenstufe (11, 12) die zweite Antriebsgeschwindigkeit (102, 202) auf einen Wert über oder unter der vorbestimmten ersten Antriebsgeschwindigkeit (100, 200) eingestellt wird.

12. Verfahren nach einem der vorhergehenden Ansprüche 9 bis 11, **dadurch gekennzeichnet, dass** die Treppensteigvorrichtung (1) in einem Einzelstufenmodus betrieben wird und im Einzelstufenmodus die Antriebsgeschwindigkeit kurz vor dem Aufsetzen eines zweiten Steigelements (4, 5) auf die nächstgelegene Treppenstufe (11, 12) reduziert wird und die Antriebsgeschwindigkeit nach dem Aufsetzen des zweiten Steigelements (4, 5) auf die maximale Antriebsgeschwindigkeit (104) erhöht wird.

13. Verfahren nach einem der vorhergehenden Ansprüche 9 bis 12, **dadurch gekennzeichnet, dass** die Treppensteigvorrichtung (1) in einem Dauerbetriebsmodus betrieben wird und im Dauerbetriebsmodus die Antriebsgeschwindigkeit kurz vor dem Aufsetzen eines zweiten Steigelements (4, 5) auf die nächstgelegene Treppenstufe (11, 12) reduziert wird und die Antriebsgeschwindigkeit nach dem Aufsetzen auf eine dritte, von der ersten und zweiten Antriebsgeschwindigkeit (200, 202) abweichende Antriebsgeschwindigkeit (204) eingestellt wird.

14. Verfahren nach einem der vorhergehenden Ansprüche 9 bis 13, **dadurch gekennzeichnet, dass** die Lage zumindest eines Steigelements (4, 5) über einen Sensor erfasst wird und die Antriebsgeschwindigkeit in Abhängigkeit der erfassten Lage eingestellt wird.

15. Verfahren nach einem der vorhergehenden Ansprüche 9 bis 14, **dadurch gekennzeichnet, dass** die Steigeinheit (3) nach einem Treppensteigvorgang in einer vorgegebenen Lage gestoppt wird.

## Claims

1. Stair climbing device (1), comprising a carrier unit (2) and a climbing unit (3) connected to the carrier unit (2), the climbing unit (3) having at least one climbing element (4, 5) which is driveable by a drive motor (6) and is configured such that it can move into contact with the respective next step (11, 12) of a staircase and can raise or lower the stair climbing device (1) to the next step (11, 12), wherein the climbing unit (3) is driveable at different drive speeds and the drive speed can be reduced with respect to a first predetermined drive speed (100, 200) shortly before a first climbing element (4, 5) is placed on the next step (11, 12), so that a soft placement is achieved, **characterised in that** the stair climbing device (1) is configured such that, after it has been placed on the next step (11, 12), the drive speed is adjusted to a second drive speed (102, 202) different from the first predetermined drive speed (100, 200).

2. Stair climbing device according to Claim 1, **characterised in that,** after the placement on the next step, the second drive speed (102, 202) can be set to a higher drive speed than the first predetermined drive speed (100, 200).

3. Stair climbing device according to either of the preceding claims, **characterised in that,** in dependence on the value the first predetermined drive speed (100, 200), the second drive speed (102, 202), after the placement on the next step (11, 12), can be set to a value above or below the predetermined first drive speed (100, 200).

4. Stair climbing device according to any one of the preceding claims, **characterised in that** the stair climbing device (1) can be operated in a single step mode, and in the single step mode the drive speed can be reduced shortly before a second climbing element (4, 5) has been placed on the next step (11, 12) and, after the second climbing element (4, 5) has been placed, the drive speed is increased to the maximum drive speed (104).

5. Stair climbing device according to any one of the preceding claims, **characterised in that** the stair climbing device (1) can be operated in a continuous operating mode and, in the continuous operating mode, the drive speed can be reduced shortly before the placement of a second climbing element (4, 5) on the next step (11, 12) and, after the placement, the drive speed can be set to a third drive speed (204) deviating from the first and second drive speeds (200, 202).

6. Stair climbing device according to any one of the preceding claims, **characterised in that** an electronic control device for controlling the drive speed is provided.

7. Stair climbing device according to any one of the preceding claims, **characterised in that** a drive speed adjustment device is provided.

8. Stair climbing device according to any one of the preceding claims, **characterised in that** at least one sensor for determining the position of at least one climbing element (4, 5) is provided.

9. Method for operating a climbing unit of a stair climbing device (1), the climbing unit (3) having at least one climbing element (4, 5) which is driveable by a drive motor (6) and is configured such that it can move into contact with the respective next step (11, 12) of a staircase and can raise or lower the stair climbing device (1) to the next step (11, 12), wherein the climbing unit (3) is driveable at different drive speeds and the drive speed is reduced with respect to a first predetermined drive speed (100, 200) shortly before a first climbing element (4, 5) is placed on the next step (11, 12), so that a soft placement is achieved, **characterised in that,** after the placement on the next step (11, 12), the drive speed is adjusted to a second drive speed (102, 202) different from the first predetermined drive speed (100, 200).

10. Method according to claim 9, **characterised in that,** after the placement on the next step (11, 12), the second drive speed (102, 202) is set to a higher drive speed than the first predetermined drive speed (100, 200).

11. Method according to Claim 9, **characterised in that,** in dependence on the value the first predetermined drive speed (100, 200), the second drive speed (102, 202), after the placement on the next step (11, 12), is set to a value above or below the predetermined first drive speed (100, 200).

12. Method according to any one of the preceding claims 9 to 11, **characterised in that** the stair climbing device (1) is operated in a single step mode, and in the single step mode the drive speed is reduced shortly before a second climbing element (4, 5) has been placed on the next step (11, 12) and, after the placement of the second climbing element (4, 5), the drive speed is increased to the maximum drive speed (104).

13. Method according to any one of the preceding claims 9 to 12, **characterised in that** the stair climbing device (1) is operated in a continuous operating mode and, in the continuous operating mode, the drive speed is reduced shortly before the placement of a second climbing element (4, 5) on the next step (11, 12) and, after the placement, the drive speed is set to a third drive speed (204) deviating from the first and second drive speeds (200, 202).

14. Method according to any one of the preceding claims 9 to 13, **characterised in that** the position of at least one climbing element (4, 5) is detected by means of a sensor and the drive speed is set in dependence on the position detected.

15. Method according to any one of the preceding claims 9 to 14, **characterised in that,** after a stair climbing process, the climbing unit (3) is stopped in a predefined position.

## Revendications

1. Dispositif de montée d'escalier (1) avec une unité porteuse (2) et avec une unité de montée (3) reliée à l'unité porteuse (2),
dans lequel l'unité de montée (3) comporte au moins un élément de montée (4, 5) qui peut être entraîné par un moteur d'entraînement (6) et qui est réalisé de telle sorte qu'il peut arriver en contact avec la marche d'escalier respectivement la plus proche (11, 12) d'un escalier et qui peut monter ou descendre le dispositif de montée d'escalier (1) sur la marche d'escalier la plus proche (11, 12),
dans lequel l'unité de montée (3) peut être entraînée avec des vitesses d'entraînement différentes et la vitesse d'entraînement peut être diminuée par rapport à une première vitesse d'entraînement prédéterminée (100, 200) peu avant la pose d'un premier élément de montée (4, 5) sur la marche d'escalier la plus proche (11, 12) de manière à obtenir une pose en douceur,
**caractérisé en ce que** le dispositif de montée d'escalier (1) est conçu de telle sorte que, après la pose sur la marche d'escalier la plus proche (11, 12), la vitesse d'entraînement est réglée sur une deuxième vitesse d'entraînement (102, 202) différente de la première vitesse d'entraînement prédéterminée (100, 200).

2. Dispositif de montée d'escalier selon la revendication 1, **caractérisé en ce que**, après la pose sur la marche d'escalier la plus proche, la deuxième vitesse d'entraînement (102, 202) peut être réglée sur une vitesse d'entraînement plus grande que la première vitesse d'entraînement prédéterminée (100, 200).

3. Dispositif de montée d'escalier selon l'une quelconque des revendications précédentes, **caractérisé en ce que**, en fonction de la valeur de la première vitesse d'entraînement prédéterminée (100, 200), après la pose sur la marche d'escalier la plus proche (11, 12), la deuxième vitesse d'entraînement (102, 202) peut être réglée sur une valeur au-dessus ou au-dessous de la première vitesse d'entraînement prédéterminée (100, 200).

4. Dispositif de montée d'escalier selon l'une quelconque des revendications précédentes, **caractérisé en ce que** le dispositif de montée d'escalier (1) peut être utilisé dans un mode marche par marche et, dans le mode marche par marche, la vitesse d'entraînement peut être réduite peu avant la pose d'un deuxième élément de montée (4, 5) sur la marche d'escalier la plus proche (11, 12) et la vitesse d'entraînement est augmentée après la pose du deuxième élément de montée (4, 5) à la vitesse d'entraînement maximale (104).

5. Dispositif de montée d'escalier selon l'une quelconque des revendications précédentes, **caractérisé en ce que** le dispositif de montée d'escalier (1) peut être utilisé dans un mode de fonctionnement continu et, dans le mode de fonctionnement continu, la vitesse d'entraînement peut être réduite peu avant la pose d'un deuxième élément de montée (4, 5) sur la marche d'escalier la plus proche (11, 12) et peut être réglée après la pose sur une troisième vitesse d'entraînement (204) différente de la première et de la deuxième vitesse d'entraînement (200, 202).

6. Dispositif de montée d'escalier selon l'une quelconque des revendications précédentes, **caractérisé en ce qu'**un dispositif de commande électronique est prévu pour commander la vitesse d'entraînement.

7. Dispositif de montée d'escalier selon l'une quelconque des revendications précédentes, **caractérisé en ce qu'**un dispositif de réglage de vitesse d'entraînement est prévu.

8. Dispositif de montée d'escalier selon l'une quelconque des revendications précédentes, **caractérisé en ce qu'**au moins un capteur destiné à la détermination de position d'au moins un élément de montée (4, 5) est prévu.

9. Procédé de fonctionnement d'une unité de montée d'un dispositif de montée d'escalier (1),
dans lequel l'unité de montée (3) comporte au moins un élément de montée (4, 5) qui peut être entraîné par un moteur d'entraînement (6) et qui est conçu de telle sorte qu'il peut arriver en contact avec la marche d'escalier respectivement la plus proche (11, 12) d'un escalier et qui peut monter ou descendre le dispositif de montée d'escalier (1) sur la marche d'escalier la plus proche (11, 12),
dans lequel l'unité de montée (3) peut être entraînée avec des vitesses d'entraînement différentes et la vitesse d'entraînement peut être diminuée par rapport à une première vitesse d'entraînement prédéterminée (100, 200) peu avant la pose d'un premier élément de montée (4, 5) sur la marche d'escalier la plus proche (11, 12) de manière à obtenir une pose en douceur,
**caractérisé en ce que**, après la pose sur la marche d'escalier la plus proche (11, 12), la vitesse d'entraînement est réglée sur une deuxième vitesse d'entraînement (102, 202) différente de la première vitesse d'entraînement prédéterminée (100, 200).

10. Procédé selon la revendication 9, **caractérisé en ce que**, après la pose sur la marche d'escalier la plus proche (11, 12), la deuxième vitesse d'entraînement (102, 202) est réglée sur une vitesse d'entraînement plus grande que la première vitesse d'entraînement prédéterminée (100, 200).

11. Procédé selon la revendication 9, **caractérisé en ce que**, en fonction de la valeur de la première vitesse d'entraînement prédéterminée (100, 200), après la pose sur la marche d'escalier la plus proche (11, 12), la deuxième vitesse d'entraînement (102, 202) est réglée sur une valeur au-dessus ou au-dessous de la première vitesse d'entraînement prédéterminée (100, 200).

12. Procédé selon l'une quelconque des revendications précédentes 9 à 11, **caractérisé en ce que** le dispositif de montée d'escalier (1) est utilisé dans un mode marche par marche et, dans le mode marche par marche, la vitesse d'entraînement est réduite peu avant la pose d'un deuxième élément de montée (4, 5) sur la marche d'escalier la plus proche (11, 12) et la vitesse d'entraînement est augmentée après la pose du deuxième élément de montée (4, 5) à la vitesse d'entraînement maximale (104).

13. Procédé selon l'une quelconque des revendications précédentes 9 à 12, **caractérisé en ce que** le dispositif de montée d'escalier (1) est utilisé dans un mode de fonctionnement continu et, dans le mode de fonctionnement continu, la vitesse d'entraînement est réduite peu avant la pose d'un deuxième élément de montée (4, 5) sur la marche d'escalier la plus proche (11, 12) et est réglée après la pose sur une troisième vitesse d'entraînement (204) différente de la première et de la deuxième vitesse d'entraînement (200, 202).

14. Procédé selon l'une quelconque des revendications précédentes 9 à 13, **caractérisé en ce que** la position d'au moins un élément de montée (4, 5) est détectée par l'intermédiaire d'un capteur et la vitesse d'entraînement est réglée en fonction de la position détectée.

15. Procédé selon l'une quelconque des revendications précédentes 9 à 14, **caractérisé en ce que**, après une opération de montée d'escalier, l'unité de montée (3) est arrêtée dans une position prédéterminée.
